# EUROPEAN PATENT APPLICATION

(11) **EP 2 256 619 A1**
(43) Date of publication of application: **01.12.2010**
(21) Application number: 09161267.1
(22) Date of filing: 27.05.2009
(51) Int. Cl.: G06F 3/14

(54) **System for generating and displaying images**

(71) Applicant: Kastrup, Bernardo, 5509 NP Veldhoven (NL)
(72) Inventor: Kastrup, Bernardo, 5509 NP Veldhoven (NL)
(74) Representative: Hatzmann, Martin

(57) **Abstract**

A system (100) for generating and displaying images comprises: (a) a plurality of active display modules (110, 120, 130, 140); (b) a global controller (180); and (c) a global communication facility (170). Each active display module algorithmically generates and displays images depending on a respective local set of states. Each active display module updates its respective local set of states depending on a global state transition rule broadcasted by the global controller through the global communication facility. Preferably, the global controller broadcasts different global state transition rules over time. Also preferably, the global controller has its own set of control states and determines a global state transition rule by means of applying a machine learning algorithm to control states of said own set of control states.

## Description

### TECHNICAL FIELD

The invention relates to the fields of architecture, interior design, consumer electronics, ambient intelligence, and embedded computing.

### BACKGROUND ART

Traditional masonry bricks and tiles used in architecture and interior design, even when comprising art work (e.g. Portuguese tiles), are visually static in nature. The same holds for traditional wallpaper used to cover entire building surfaces, like walls. Dynamic visual content like video, on the other hand, opens a whole new dimension in architecture and interior design, rendering the building environment alive and responsive. For this reason, architects and interior designers often integrate video into their designs, as discussed e.g. in "Integrating Video into Architecture: Using video to enhance an architectural design will make any project come to life", by Amy Fraley, John Loughmiller, and Robert Drake, in ARCHI.TECH, May/June 2008. When integrating video displays into a building surface like a wall, floor, or ceiling, the effect can be significantly optimized by covering a significant portion of the surface with video displays, analogously to what one would do with wallpaper. It is advantageous that such integration be seamless, i.e. that it create the impression that the visual content displayed merges smoothly into the building surface. The visual content itself must be suitable as a background, helping create the desired atmosphere but not commanding uninterrupted attention from the observer. Finally, the effect of integrating video into a building surface is maximized when the visual content is not predicable or repetitive. Therefore, and since the visual content will often be displayed continuously, it is advantageous that the visual content change often, without significant repetition, and in substantially unpredictable ways.

The success of integrating video into architecture and interior design, however, is limited by (a) the size and aspect ratio of the displays used; (b) the availability of appropriate, sufficiently varied, and properly formatted visual content; and (c) bandwidth, power consumption, and bulk issues related to transmitting visual content from a point of origin to the point where it needs to be displayed. Regarding (a), making displays large enough, and in the right shapes, to cover significant portions of walls like wallpaper is uneconomical and technically impractical due e.g. to manufacturing and logistics issues. Although alternatives exist in the art to combine multiple displays together into an apparently continuous virtual single display (see e.g. http://en.wikipedia.org/wikilVideo wall) for use e.g. in large indoor spaces or outdoors, it is impractical and economical, in terms of bulk, cost, power dissipation, etc., to do so in the context of general interior design. Regarding (b), pre-determined visual content like e.g. TV programming or movies will often not have the correct format to fit, without distortions, into the shape of e.g. an arbitrary wall. Moreover, standard TV programming or movies are not suitable as background decoration, since they command uninterrupted attention from the observer. Finally, even when visual content is made specifically for a background application, it is often economically infeasible to produce it in sufficiently large amounts, in the required shapes and aspect ratios, for continuous display without frequent repetition. As a consequence, the visual content would eventually become predictable, which is unattractive and even annoying from an observer's perspective. Regarding (c), solutions have been devised to minimize the amount of redundant visual content that is transmitted to an assembly comprising multiple display modules, as described e.g. in "Active Modules for Large Screen Displays", by Hugh C. Lauer and Chia Shen, US 5,523,769, of June 4, 1996. In said document, active display modules are described, which comprise local processing to locally convert compressed, structured video data into images. Each active display module in the system receives its own unique data stream, corresponding to the images that it must display. By transmitting only the compressed, structured data to the active display modules through a distributed network, bandwidth, power dissipation, and bulk issues are reduced. However, although compression can eliminate large redundancies in the data transmitted, all the information necessary to fully and unambiguously specify the images displayed in each active display module must still be transmitted. This still requires significant bandwidth and poses associated cost, power dissipation, and bulk problems for most practical applications. Such problems are further exacerbated the more display modules are used, since each active display module requires its own, unique data stream to be transmitted.

### DISCLOSURE OF INVENTION

It is an object of the present invention to define a system comprising active display modules that can be coupled with one another to substantially cover a building surface of arbitrary shape and dimensions, wherein the amount of data that needs to be transmitted to the individual active display modules for displaying images is significantly reduced when compared to the prior art. It is a further object of the present invention that the system comprising active display modules be scalable, so that further active display modules can be added to the system without requiring additional data to be transmitted.

The invention is defined by the independent claims. Advantageous embodiments are described in the dependent claims.

According to the present invention, a system comprising a plurality of active display modules for generating and displaying images further comprises: (a) a global controller; and (b) a global communication facility connecting said global controller with each active display module in the system. Each active display module in the system generates its own images according to an image generation algorithm, depending on a single low-bandwidth data stream broadcasted to all active display modules in the system. By broadcasting a single, low-bandwidth data stream to all active display modules in the system, as opposed to transmitting different data streams to different active display modules, the amount of data transmission and associated power consumption are significantly minimized. Moreover, since the same low-bandwidth data stream is broadcasted to all active display modules, the system can be scaled up by adding more active display modules without requiring additional data to be transmitted. Each active display module in the system comprises a display facility for displaying images and a processing facility for executing parts of the image generation algorithm. Said display facility can comprise e.g.: (a) one or a plurality of discrete light-emitting devices like e.g. light bulbs, light-emitting diodes (LEDs), light-emitting surfaces, a plurality of LEDs comprised in a so-called LED matrix, or LED dot matrix, as known in the art, etc.; (b) a flat-panel display like e.g. a liquid-crystal display, a plasma display, an organic light-emitting diode display, etc.; (c) a reflective display like e.g. electronic paper, be it based on electrophoretic technology, electro-wetting technology, or any other reflective display technology; (d) etc. The active display modules are preferably arranged together so that their respective display facilities form an apparently continuous virtual single display. The surface area of said apparently continuous virtual single display is then the sum of the surface areas of the respective display facilities of its constituent active display modules. By coupling together several active display modules one can substantially cover a building surface of arbitrary shape and dimensions. Each active display module in the system comprises a local set of states, said states being determined according to the image generation algorithm. Each active display module generates images based on current and/or past states of its respective local set of states. The appearance of forming a continuous virtual single display is only achieved when the images displayed in different active display modules together form an integrated visual pattern spanning multiple active display modules. Therefore, the images displayed in an active display module must be visually coherent with the images displayed in adjacent active display modules. In order to achieve such visual coherence, the image generation algorithm generates images in a way that takes into account current and/or past states of the local set of states of adjacent active display modules. Each active display module is then arranged to communicate at least one state of its respective local set of states with an adjacent active display module, preferably through a local communication facility. Preferably, albeit not necessarily, the states in the local set of states of each active display module are randomly initialized (i.e. e.g. each state is assigned a random value), so that each active display module in the system has a unique local set of states. This ensures that the images generated in each active display module are different from the images generated in other active display modules in the system. So that the images displayed in the system change over time, like frames of a movie, at least one state in the local set of states of each active display module is updated according to a so-called global state transition rule, said global state transition rule being part of the image generation algorithm. The global state transition rule updates a state in the respective local set of states of each active display module depending on (a) another state in said respective local set of states, and/or (b) a state in the local set of states of an adjacent active display module. The global state transition rule is determined by the global controller and used in all active display modules in the system. State updates in each active display module are performed locally by the respective processing facility comprised in said active display module. Therefore, the global state transition rule is broadcasted by the global controller to all active display modules in the system through the global communication facility. The low-bandwidth data stream referred to above comprises the global state transition rule as it is broadcasted to the active display modules. This way, while idiosyncrasies of the images generated and displayed in each active display module are unique, given the particular random initialization of states and state history of said active display module, the way said images evolve over time is global and synchronized across the entire system, given the global state transition rule. The end result is a balanced combination between local image variety and global image coherence akin to what can be achieved with the prior art, but with significantly reduced data transmission bandwidth and a scalable system. Instead of transmitting image data to the active display modules, compressed as said image data may be, the present invention broadcasts a single algorithmic rule instead (the global state transition rule); the image data themselves are then generated locally, in each active display module, partly according to said algorithmic rule. The disadvantage of the present invention with respect to the prior art is that only abstract, algorithmically-generated images can be displayed. However, in many architectural and interior design applications, abstract images are preferred over photographed visual content because the latter is often associated with advertising.

In order to minimize the repetitiveness and predictability of the images displayed by the system, it is advantageous that the system be arranged so that the global controller determines and broadcasts a plurality of different global state transition rules over time, during the operation of the system. Said plurality of different global state transition rules broadcasted over time is then comprised in the single low-bandwidth data stream broadcasted to all active display modules in the system. Each new global state transition rule changes the style and dynamics of the images generated and displayed by the system. It should be noted that, even when the state transition rule changes and is re-broadcasted after every image frame displayed, the corresponding data transmission bandwidth is still very low when compared to the prior art, since an algorithmic rule typically comprises much less information than even highly-compressed image data. Preferably, when the system performs a transition to a new global state transition rule, said new global state transition rule is applied by each active display module to its respective local set of states, as previously updated by the preceding global state transition rule. In other words, preferably the local sets of states are not reinitialized when the global state transition rule changes. This helps achieve a smooth and seamless transition between the old and new image styles and dynamics.

In order to maximize the appearance that the individual active display modules in the system collectively form a continuous virtual single display, it is advantageous that an active display module display a substantial visual pattern - comprising in the order of 100 http://en.wikipedia.org/wiki/Pixelimage pixels or more - that is visually coherent with another substantial visual pattern displayed in an adjacent active display module. To achieve this effect, display facilities comprising a relatively large number of tightly-integrated physical pixels - like flat-panel displays or electronic paper displays - are preferably used alongside image generation algorithms that are conducive to the generation of many large, discernible visual patterns, as opposed to small, fragmented ones.

The more different global state transition rules are used over time, the more visual variety the system will display, and the less predictable it will be. Therefore, it is advantageous that the global controller determine the global state transition rule on-the-fly, according to an algorithm, as opposed to e.g. choosing from a limited set of fixed global state transition rules. Preferably, such algorithm comprises a machine learning algorithm that determines new global state transition rules depending on past and/or current behavior of the system, so to ensure continuity.

Finally, in some applications it may be advantageous to combine the global controller with one of the active display modules, so to save space and/or to hide the potentially unattractive bulk of a separate global controller.

Other embodiments are described in this description and in the appended claims.

### BRIEF DESCRIPTION OF DRAWINGS

The invention is described in more details and by way of non-limiting examples with reference to the accompanying drawings, wherein:
FIG. 1 schematically depicts a system according to the present invention;
FIG. 2 schematically depicts an active display module;
FIG. 3 depicts a physical embodiment of an active display module;
FIG. 4 depicts how two active display modules can be locally connected together through a local communication facility;
FIG. 5 depicts a physical embodiment of a system according to the present invention;
FIG. 6 schematically depicts parts of an image generation algorithm;
FIG. 7 schematically depicts a neighborhood of cells as used in an image generation algorithm;
FIG. 8 schematically depicts another neighborhood of cells as used in an image generation algorithm;
FIG. 9 depicts three active display modules, each displaying three successive image frames generated with a cellular automaton algorithm;
FIG. 10 depicts three active display modules, each displaying a different image frame at two different moments in time, the image frames being generated with a continuous automaton algorithm;
FIG. 11 schematically depicts a system wherein a machine learning algorithm in the global controller is used to determine different global state transition rules over time;
FIG. 12 depicts two snapshots of a simulation of the system depicted in FIG. 11.

### MODES FOR CARRYING OUT THE INVENTION

In the following detailed description numerous specific details are set forth in order to provide a thorough understanding of the present invention. However, it will be understood by one skilled in the art that the present invention may be practiced without these specific details. In other instances, well known methods, procedures, and components have not been described in detail so as not to obscure aspects of the present invention. Throughout the description like reference numerals refer to like elements.

It will be understood that, although the terms first, second, third etc. may be used herein, and in the appended claims, to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein. All publications, patent applications, patents, and other references mentioned herein are incorporated by reference in their entirety. In case of conflict, the present specification, including definitions, will control. In addition, the materials, methods, and examples are illustrative only and not intended to be limiting.

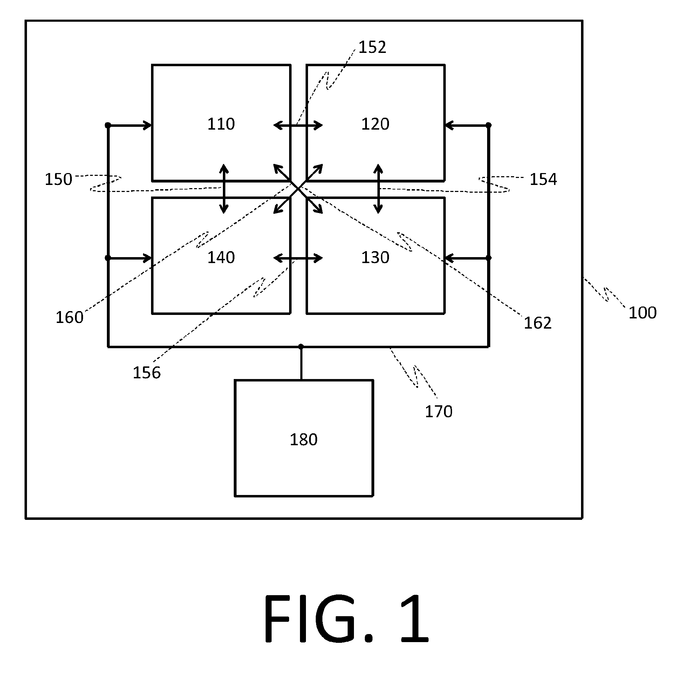

FIG. 1 illustrates a system 100 comprising: (a) four active display modules 110, 120, 130, and 140; (b) four local communication facilities 150, 152, 154, and 156, each of which connects two horizontally- or vertically-adjacent ones of the four active display modules; (c) another two local communication facilities 160 and 162, each of which connects two diagonally-adjacent ones of the four active display modules; (d) a global controller 180; and (e) a global communication facility 170 for connecting the global controller 180 with each of the four active display modules 110, 120, 130, and 140. Each of the four active display modules 110, 120, 130, and 140 comprises a local set of states and can communicate one or more states of its respective local set of states with an adjacent active display module via the appropriate one of the local communication facilities 150, 152, 154, 156, 160, or 162. The global controller 180 determines the global state transition rule and broadcasts said global state transition rule to all four active display modules 110, 120, 130, and 140 via the global communication facility 170. Preferably, the global communication facility 170 comprises an electronic bus system, as know in the art, wherein the global controller 180 is the bus master and the four active display modules 110, 120, 130, and 140 are bus slaves.

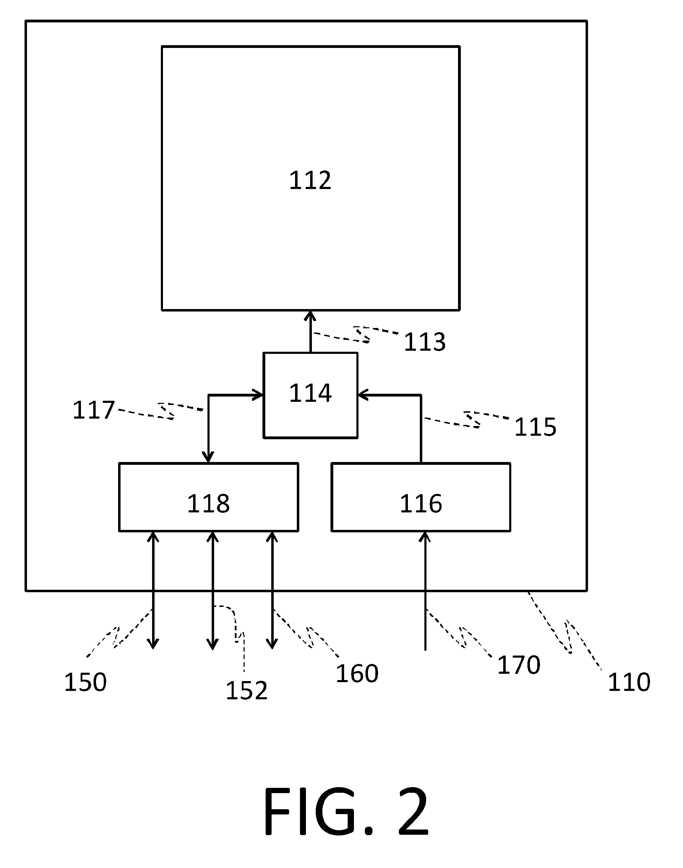

FIG. 2 illustrates an embodiment of an active display module 110 comprising: (a) a display facility 112; (b) a processing facility 114 connected to the display facility 112 via connection line 113; (c) a local communication interface 118 connected to the local communication facilities 150, 152, and 160, as well as to the processing facility 114 via connection line 117; and (d) a global communication interface 116 connected to the global bus 170, as well as to the processing facility 114 via connection line 115. The processing facility 114 preferably comprises a microprocessor for processing data and a memory for storing and retrieving data. The local communication interface 118 connects the processing facility 114 to the local communication facilities 150, 152, and/or 160. Preferably, the local communication interface executes an electronic communication protocol to send and/or receive data to and/or from adjacent active display modules (120, 130, 140) via the local communication facilities 150, 152, and/or 160. In some embodiments, the processing facility 114 and the local communication interface 118 may be partly or entirely implemented by one and the same element of hardware (e.g. a microprocessor). Data received by the local communication interface 118 from an adjacent active display module (120, 130, 140) is sent to the processing facility 114 via connection line 117. When the processing facility 114 needs to send data to an adjacent active display module (120, 130, 140), it sends said data to the local communication interface 118, which then forwards said data to said adjacent active display module (120, 130, 140) via the local communication facilities 150, 152, and/or 160. Global communication interface 116 comprises the logic (e.g. a bus slave interface) and/or wiring needed to interface the processing facility 114 to the global communication facility 170, so that the processing facility 114 can receive global state transition rules broadcasted by the global controller (180).

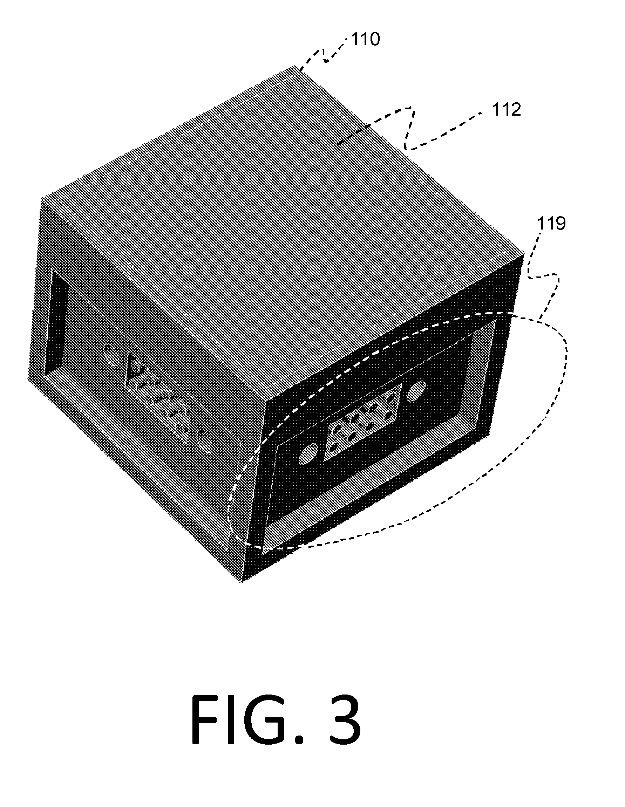

FIG. 3 illustrates a physical embodiment of an active display module 110. Display facility 112 occupies most of the front surface of the active display module. Four local connection mechanisms 119 are located each at a side surface of the active display module. The local connection mechanisms 119 comprise the external pins and connectors associated to the local communication interface (118), by means of which the local communication interface (118) can be mechanically and electromagnetically connected to the local communication facilities (150, 152). A global connection mechanism (not shown in FIG. 3) is preferably located at the rear surface of the active display module, by means of which the global communication interface (116) can be mechanically and electromagnetically connected to the global communication facility (170). It should be noted that, due to its shape and the location of the local connection mechanisms 119, the physical embodiment illustrated in FIG. 2 enables only horizontally- and/or vertically-adjacent active display modules to be locally-connected through local communication facilities (150, 152); the local connection of diagonally-adjacent active display modules through a local communication facility (160) is not possible in this embodiment. Those skilled in the art will be able to devise other physical embodiments of an active display module that enable a local connection between diagonally-adjacent active display modules without departing from the scope of the appended claims. Alternatively, and preferably, image generation algorithms can be used which do not require a local connection between diagonally-adjacent active display modules.

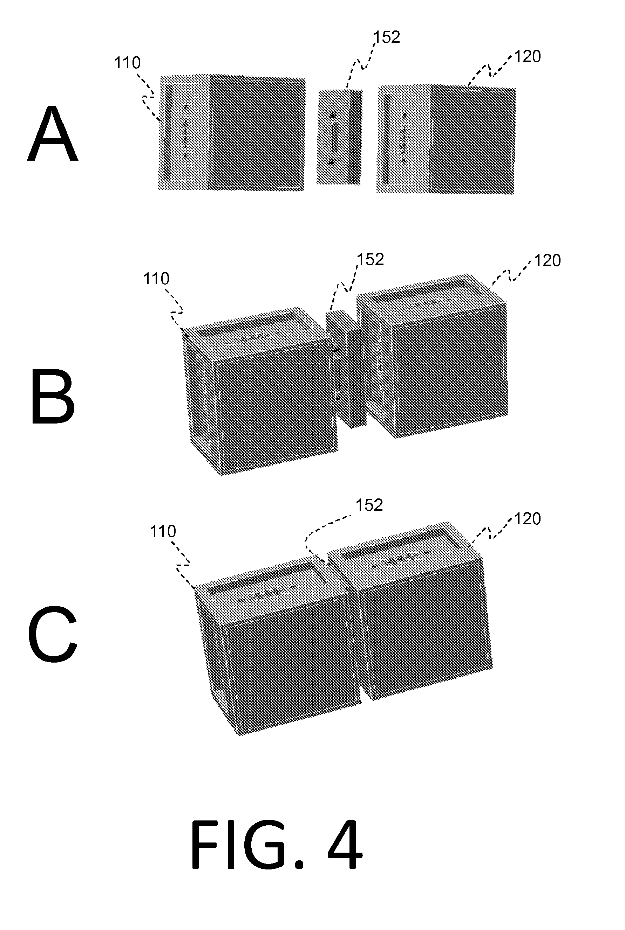

FIG. 4 A to C illustrate, in chronological order, physical views of how two horizontally-adjacent active display modules 110 and 120 can be locally-connected together through local communication facility 152. It should be noted that the local communication facility 152 connects together the pins and connectors of the two respective, opposing local connection mechanisms (119) of the two active display modules. It should also be noted that the physical embodiment of the active display modules is such that the local communication facility 152 becomes sandwiched in between the two active display modules 110 and 120, and is no longer visible once the connection is established.

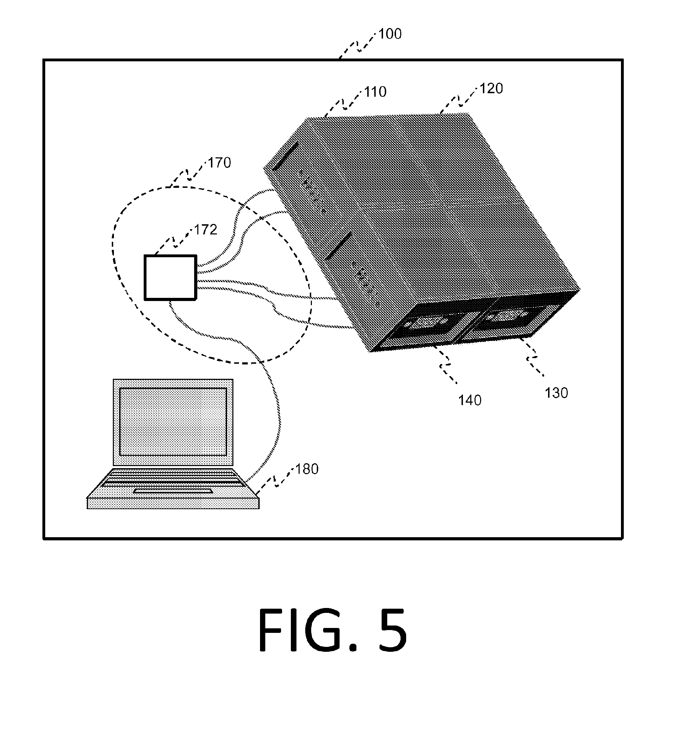

FIG. 5 illustrates a physical embodiment of a system 100 comprising: (a) four active display modules 110, 120, 130, and 140; (b) a global communication facility 170, comprising both electronics 172 and wiring (in other embodiments, the global communication facility 170 comprises purely wiring, no electronics); and (c) a global controller 180 which, in this preferred embodiment, consists of a laptop computer (generally speaking, it is advantageous that the global controller comprise a general-purpose computer like a desktop, laptop, netbook, etc., due to its inherent flexibility and programmability). The system 100 also comprises four local communication facilities (150, 152, 154, and 156) that are not shown in FIG. 5 because they are sandwiched in between pairs of adjacent active display modules and are not visible. It should be noted that the global communication facility 170 is connected both to the global controller 180 and to each of the four active display modules 110, 120, 130, and 140 through a global connection mechanism located at the rear surface of each of the active display modules (not shown in FIG. 5 because the viewing angle renders them invisible).

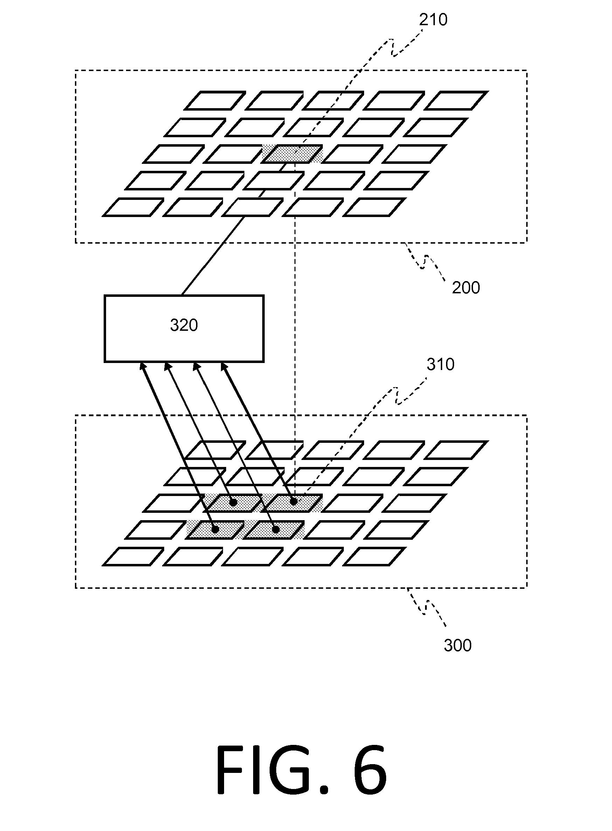

FIG. 6 illustrates an embodiment of parts of an image generation algorithm. Preferably, the display facility (112) of an active display module is divided up into display segments for algorithmic purposes, thereby forming a 2-dimensional array of display segments. Each display segment comprises at least one but potentially a plurality of the physical pixels of the corresponding display facility. This way, if the display facility comprises e.g. a plurality of discrete light-emitting devices - like e.g. discrete LEDs - organized in a matrix, then each display segment will correspond to a continuous segment of said matrix comprising at least one of the discrete LEDs. Alternatively, if the display facility comprises e.g. a flat-panel display, then each display segment will correspond to a continuous segment of said flat-panel display comprising at least one of its integrated physical pixels. FIG. 6 illustrates a 2-dimensional array of display segments 200 comprising a central display segment 210. For the avoidance of doubt, it should be noted that the 2-dimensional array of display segments 200 corresponds to (parts of) a display facility (112). The images displayed in each display segment are generated by the image generation algorithm. The image generation algorithm preferably generates images on an image frame by image frame basis, whereby in each iteration of the image generation algorithm a new image frame is generated and displayed in the 2-dimensional array of display segments 200 of the active display module. The parts of the image frame displayed in each display segment are referred to as frame segments. The data the image generation algorithm operates on to generate the frame segments are preferably states held by algorithmic elements called cells, said cells being preferably arranged in a 2-dimensional array of cells 300, said 2-dimensional array of cells 300 comprising as many cells as there are display segments. This way, there is a one-to-one correspondence between each display segment and a cell, each display segment corresponding to a different cell. In FIG. 6 display segment 210 corresponds to cell 310. For ease of reference, the typology of the 2-dimensional array of display segments is preserved in the array of cells, i.e. e.g.: (a) if a first display segment corresponding to a first cell is physically near a second display segment corresponding to a second cell, then the first cell is said to be near the second cell; (b) if a first display segment corresponding to a first cell is physically e.g. to the right of a second display segment corresponding to a second cell, then the first cell is said to be to the right of the second cell; (c) cells corresponding to physically adjacent display segments are said to be adjacent cells; and so on. For the avoidance of doubt, the local set of states comprised in an active display module, as referred to earlier in this description and in the attached claims, comprises, in this embodiment, the states of the cells in the 2-dimensional array of cells 300. Each active display module then has its own 2-dimensional array of cells (and therewith, its own local set of states).

Each frame segment of each image frame is generated depending on states of cells comprised in the 2-dimensional array of cells. If a frame segment to be displayed in a display segment is generated directly depending on a (current and/or past) state of a given cell, then said given cell is said to be associated to said display segment; conversely, said display segment is also said to be associated to said given cell. It should be noted that an association between a cell and a display segment entails a direct algorithmic dependency between a state of said cell and the image frame generated for display in said display segment; the association is thus independent of the physical location of said state. The cell states are preferably stored in a memory comprised in the processing facility (114) of the corresponding active display module. At least the cell corresponding to a display segment is associated to said display segment. In FIG. 6, for instance, display segment 210 is associated at least to its corresponding cell 310. Therefore, there is at least one cell associated to each display segment, so a frame segment can be generated depending directly on a state of said associated cell. Alternatively, a display segment can be associated to a plurality of cells. In FIG. 6, the frame segment to be displayed in display segment 210 is generated by taking the output of a mathematical function 320 applied to states of four different highlighted cells comprised in the 2-dimensional array of cells 300. Said four different cells are then said to be comprised in the "footprint" of display segment 210. More generally, a cell is comprised in the footprint of a display segment if the frame segment to be displayed in said display segment is generated depending directly on a (current and/or past) state of said cell. Therefore, all cells comprised in the footprint of a display segment are associated to said display segment. Since at least the cell corresponding to a display segment is associated to said display segment, the footprint of a display segment comprises at least its corresponding cell. A footprint comprising only the corresponding cell is said to be a minimal footprint.

Since each image frame is generated depending on states of cells comprised in the 2-dimensional array of cells, it is preferred that at least some of said states change from one iteration of the image generation algorithm to the next, so different image frames can be generated in succession and thereby form dynamic visual patterns. To achieve this, the image generation algorithm is preferably arranged to update cell states after each iteration of the image generation algorithm, so a new image frame is generated depending on new cell states. To ensure that different active display modules in the system (100) generate mostly different (albeit visually coherent) image frames at any point in time, it is preferred that each active display module independently and randomly initialize the cell states in its respective 2-dimensional array of cells.

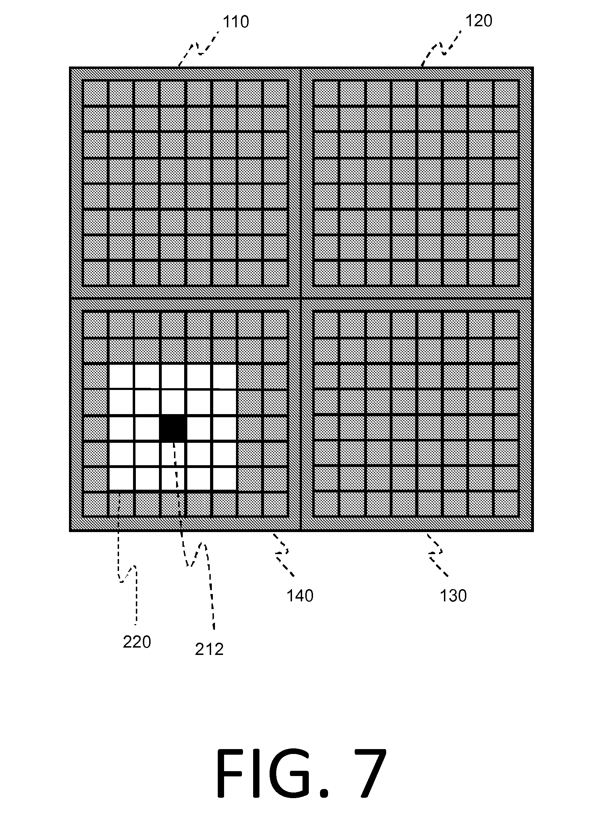

FIG. 7 illustrates an assembly of four active display modules 110, 120, 130, and 140. Display segment 212 of active display module 140 is highlighted. Since there is a one-to-one correspondence between cells and display segments, for the sake of brevity in all that follows the same reference sign and the same element of a drawing may be used to refer to a display segment or to its corresponding cell, interchangeably. This way, reference may be made to e.g. "display segment" 212 or to "cell" 212 in FIG. 7. The context of the reference determines whether the physical element (display segment) or the corresponding algorithmic element (cell) is meant.

The image generation algorithm comprises determining how the states of the cells change from one iteration of the image generation algorithm to the next. In order to favor spatial locality of reference in the computations and communications comprised in the image generation algorithm (with advantages in speed and power consumption), it is preferred that the next state of a given cell be dependent mostly upon the current and/or past states of nearby cells. Such nearby cells are said to be comprised in the cell neighborhood of the given cell. The cell neighborhood of a cell may comprise the cell itself. In FIG. 7, a cell neighborhood 220 of cell 212 is illustrated, said cell neighborhood 220 comprising: (a) cell 212 itself; (b) all cells adjacent to cell 212; and (c) all cells adjacent to cells that are adjacent to cell 212; in other words, in FIG. 7 the cell neighborhood 220 of cell 212 comprises all cells within a Chebyshev distance of two cells from cell 212. This way, the next state of cell 212, as computed by the image generation algorithm, will depend mostly on the current and/or past states of the cells comprised in cell neighborhood 220. In order to compute the next state of cell 212, the image generation algorithm comprises a state transition rule that outputs the new state of cell 212 when given as input current and/or past states of the cells in cell neighborhood 220. More generally speaking, the image generation algorithm comprises a state transition rule to determine the next state of a given cell depending on current and/or past states of cells in a cell neighborhood of said given cell. In such an embodiment, the global state transition rule is then simply a state transition rule that is used concurrently in all active display modules in the system.

For the avoidance of doubt, it should also be noted that, in the embodiment currently being described, in an iteration of the image generation algorithm a new state of a cell is calculated depending on the states of the cells in its cell neighborhood, and then a new frame segment is generated depending directly on said new state. Therefore, said frame segment depends indirectly on the states of all the cells comprised in said cell neighborhood. However, since such dependence is indirect (i.e. it operates via said new state), it does not entail that all cells in the cell neighborhood are associated to the display segment displaying said new frame segment. In other words, the footprint of a display segment does not necessarily comprise all cells in the cell neighborhood of the cell corresponding to said display segment.

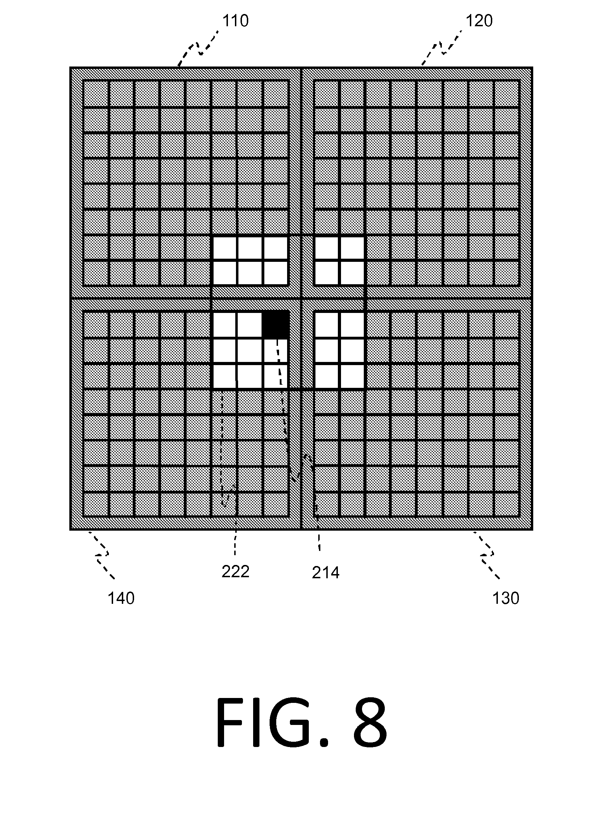

The key advantage of favoring spatial locality of reference in the image generation algorithm becomes apparent in FIG. 8. The next state of cell 214 will be dependent upon the current and/or past states of the cells comprised in cell neighborhood 222. However, unlike the case illustrated in FIG. 7, the cell neighborhood now comprises cells from different active display modules. This way, cell neighborhood 222 comprises: (a) six cells from active display module 110; (b) four cells from active display module 120; (c) six cells from active display module 130; and (d) nine cells from active display module 140. In order to compute the next state of cell 214, the image generation algorithm needs to read out the states of all cells in cell neighborhood 222. Therefore, active display modules 110, 120 and 130 communicate current and/or past states of their respective cells comprised in cell neighborhood 222 to active display module 140 by means of using the appropriate local communication facilities (150, 152, 154, and 156). Preferably, after said communication, the current and/or past states of all cells in cell neighborhood 222 become available in a memory in the processing facility (114) of active display module 140.

In FIG. 8 the physical embodiment of an active display module illustrated in FIG. 3 is assumed. Therefore, there is no local communication facility connecting active display modules 140 and 120 directly. It can be said that there are two "hops" between active display modules 140 and 120, while there is just one "hop" between e.g. active display modules 140 and 110. Therefore, the current and/or past states of the four cells from active display module 120 comprised in cell neighborhood 222 need to be communicated to active display module 140 via active display module 110 or active display module 130. This way, if e.g. active display module 110 is used to pass on the data from active display module 120 to active display module 140, then active display module 110 needs to communicate to active display module 140 the current and/or past states of its own six cells comprised in cell neighborhood 222 as well as the current and/or past states of the four cells from active display module 120 also comprised in cell neighborhood 222. The more data is communicated across active display modules, and the more "hops" there are between the communicating active display modules, the higher the penalty involved in terms of computing time and power consumption. Here a trade-off becomes apparent: on the one hand, by increasing the size of a cell neighborhood more complex image generation algorithms can be implemented by means of which richer and more complex visual patterns can be produced; on the other hand, by limiting the size of a cell neighborhood one can minimize the amount of data, as well as the number of "hops", involved in the corresponding communications. As a matter of fact, there are cell neighborhood configurations known in the art that comprise no cells from diagonally-adjacent active display modules, therefore limiting the number of "hops" in this embodiment to one. One example of such a cell neighborhood is a so-called Von Neumann Neighborhood.

It should be noted, for the avoidance of doubt, that a footprint is analogous to a cell neighborhood in that a footprint may comprise cells from different active display modules, the states of which then need to be communicated across active display modules for generating a frame segment. Preferably, the image generation algorithm is arranged so that the footprint of a display segment comprises, next to the cell corresponding to said display segment, at most a sub-set of the cells adjacent to said cell corresponding to the display segment. This way, in practice the footprint of a display segment will often be comprised in the cell neighborhood of the cell corresponding to said display segment, and no additional cell state data will need to be communicated across active display modules other than what is entailed by said cell neighborhood.

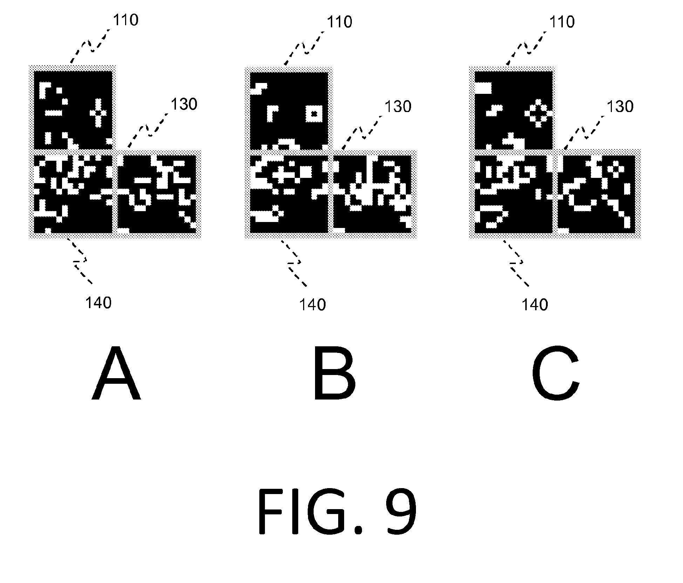

FIG. 9 A to C illustrate an assembly of three active display modules 110, 130, and 140 wherein the display facility of each active display module is divided into a 14x14 array of display segments. Each active display module 110, 130, and 140 has its own 2-dimensional array of 14x14 cells whose states are initialized randomly and independently. The frame segment displayed in each display segment is generated depending only on the corresponding cell, i.e. the footprint of all display segments is a minimal footprint. With a minimal footprint, the cell corresponding to each display segment is also the sole cell associated to said display segment. Each display segment displays white in all of its physical pixels if its associated cell's state is one, or black if its associated cell's state is zero. The state transition rule used to determine how the states of the cells evolve from one iteration of the image generation algorithm to the next is that entailed by Conway's Game of Life cellular automaton. Cellular Automata are known in the art, for instance, from "Cellular Automata", by Andrew Ilachinski, World Scientific Publishing Co Pte Lid, July 2001, ISBN-13: 978-9812381835. A cellular automaton algorithm entails a state transition rule for determining the next state of a cell (214) based on current and/or past states of cells in its cell neighborhood (222), whereby the same state transition rule applies for determining the next states of all cells in a typically 2-dimensional array of cells. The set of all cell states comprised in the array of cells at any given iteration of the algorithm is called a "generation". In each iteration of the algorithm the states of all cells are updated so the entire array of cells "evolves" onto the next generation.

According to Conway's Game of Life algorithm each cell can assume one of two possible states: one (alive) or zero (dead). Each iteration of the algorithm then applies the following state transition rule to each cell: (a) any live cell with two or three live adjacent cells continues to live in the next generation; (b) any dead cell with exactly three live adjacent cells becomes alive in the next generation; and (c) in all other cases the cell dies, or stays dead, in the next generation. Therefore, the cell neighborhood entailed by the Game of Life algorithm comprises all adjacent cells of a given cell, as well as the given cell itself. This is referred to in the art as a "Moore neighborhood". Only the current states of the cells in the cell neighborhood (and not any past states) are considered for determining the next state of said given cell. FIG. 9 A illustrates three image frames generated depending on a first generation of the Game of Life computed in each of the three active display modules; FIG. 9 B illustrates three image frames generated depending on a second generation of the Game of Life computed in each of the three active display modules; and FIG. 9 C illustrates three image frames generated depending on a third generation of the Game of Life computed in each of the three active display modules; said first, second, and third generations of the Game of Life being successive. All three drawings were produced from an actual simulation of an assembly of three active display modules. It should be noted that the evolution of the cell states at the edges of the display facilities is computed seamlessly, as if all three 2-dimensional arrays of cells, one in each active display module, together formed a single, continuous 2-dimensional array of cells. This is achieved by having each active display module communicate the states of the cells at the edges of its respective display facility to adjacent active display modules. This way, an arbitrarily-large and arbitrarily-shaped cellular automaton can be constructed by connecting the appropriate number of active display modules together.

In the example of FIG. 9, the Game of Life state transition rule is determined by the global controller (not shown in FIG. 9) and broadcasted to all three active display modules 110, 130, and 140 via the global communication facility (also not shown in FIG. 9) as the global state transition rule, so that all three active display modules execute the Game of Life. In an advantageous embodiment, after at least one (but potentially many more) generation(s) of the Game of Life has been computed, the global controller (180) then determines and broadcasts a new, different global state transition rule; for instance, the "Coagulation Rule" known in the art. The active display modules then preferably first apply the Coagulation Rule to the last generation produced by the Game of Life, so a seamless transition between rules takes place. From the moment of rule transition onwards, the cell states then evolve according to the new dynamics and style characteristic of the Coagulation Rule. Therefore, according to the present invention, the global controller (180) can broadcast different global state transition rules to the processing facility (114) of each active display module so they compute a number of different cellular automaton algorithms in succession, over time, thereby producing a rich variety of visual effects with little or no repetition. As a matter of fact, cellular automaton algorithms are known to produce beautiful but highly repetitive visual effects; therefore, by allowing for multiple cellular automaton algorithms to be used in succession, transitioning seamlessly from one to the other, the present invention tackles a limitation of the prior art.

Cellular automata like the Game of Life and the Coagulation Rule are relatively simple algorithms that operate on integer-valued cell states (zero and one in the cases above). Much richer, more subtle, and more attractive images can be produced by so-called "continuous automata", as known in the art. Continuous automata are cellular automata that operate on real-valued cell states. An example is discussed next.

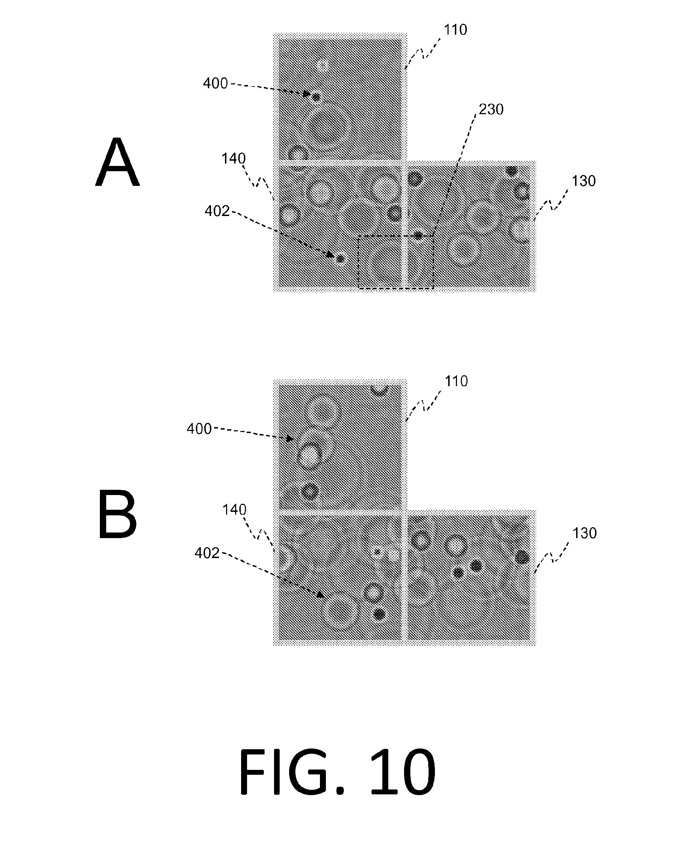

FIG. 10 A and B respectively illustrate two continuous automaton generations from a simulation comprising three active display modules 110, 130, and 140, all computing a continuous automaton algorithm that emulates the propagation of waves on a liquid. As known from e.g. "Cellular Automata Modeling of Physical Systems", by Bastien Chopard and Michel Droz, Cambridge University Press (June 30, 2005), ISBN-13: 978-0521673457, many physical systems can be simulated by means of cellular automaton algorithms. The continuous automaton algorithm used in FIG. 10 was derived from the studies published in "Continuous-Valued Cellular Automata in Two Dimensions", by Rudy Rucker, appearing in New Constructions in Cellular Automata, edited by David Griffeath and Cristopher Moore, Oxford University Press USA (March 27, 2003) ISBN-13:978-0195137087. Each display segment comprises a single physical pixel. Each display segment is associated to a single cell (minimal footprint). Both current and past states of a cell are used to generate a frame segment (a single pixel value in this case) for the associated display segment. Each display facility is assumed to have 198x198 physical pixels in the simulation, so an array of cells comprising 198x198 cells is used in the continuous automaton computation of each active display module. The state of each cell is real-valued and represents the "height level" of the "liquid" at the particular location of said cell. The different colors displayed in the image frames correspond to different cell state values (i.e. "liquid height levels"). Once again, cell state information corresponding to the edges of the display facility of each active display module is communicated to adjacent active display modules so the continuous automaton can be computed as if for a single array of cells spanning all display facilities in the assembly. An extra algorithm is added to the simulation to introduce random "disturbances" to the "liquid surface" - occasionally forcing changes to the states of small groups of adjacent cells at random positions - which give rise to the "waves". Said extra algorithm is purely local to a given active display module, requiring no information from other active display modules or from the global controller (180). Each image frame displayed in an active display module is generated depending on a different generation of the continuous automaton computed in said active display module.

The cellular automaton generation shown in FIG. 10 B occurs 33 generations after the generation shown in FIG. 10 A. It should be noted that visual patterns 400 and 402 in FIG. 10 A, corresponding to disturbances to the "liquid surface" at two different random positions, "propagate" further as "wave-fronts" when shown again in FIG. 10 B. It should also be noted that the "wave-fronts" propagate seamlessly across active display module boundaries, as shown in the display region 230 in FIG. 10 A. This is achieved because the continuous automaton algorithm, based on cell state data exchanged between the active display modules, generates visual patterns in an active display module that are visually coherent with the visual patterns generated in adjacent active display modules, thereby forming an integrated visual pattern spanning multiple active display modules. This way, different active display modules display different parts of said integrated visual pattern, like the "wave-front" in display region 230, part of which is displayed in active display module 140, another part of which is displayed in active display module 130. Naturally, as also shown in display region 230, because the display facilities of two adjacent active display modules do not mechanically touch due to the space taken by the casings of the active display modules, the appearance of continuity is not perfect as the "wave-front" crosses the active display module boundary. This effect can be advantageously reduced by making the active display module casing as thin as practical, or by adding an algorithmic compensation for this effect to the image generation algorithm. An algorithmic compensation may be realized by extending the 2-dimensional array of cells with an additional set of cells as if it spanned over the space taken by the casing. Although these additional cells do not correspond to a display segment, this gives the impression that the displayed patterns are continuous, extending invisibly below the casings of the active display modules.

It should be noted that the continuous automaton algorithm illustrated in FIG. 10 generates substantial visual patterns (e.g. the "wave-fronts" 400 and 402 after they have propagated for a while, as illustrated in FIG. 10 B), as opposed to the small, fragmented visual patterns generated by the Game of Life, as illustrated in FIG. 9. It should also be noted that 198x198 display segments are used in the case illustrated in FIG. 10, while only 14x14 display segments are used in the case illustrated in FIG. 9. The effect of both of these observations is that, when a substantial visual pattern spans across different active display modules, as shown in display region 230, there emerges a strong appearance that the active display modules form a continuous virtual single display, as desired. This appearance is significantly less strong in the case illustrated in FIG. 9. Therefore, in the context of claim 7, image generation algorithms conducive to generating many substantial visual patterns, like the algorithm illustrated in FIG. 10, are preferred. Still in the context of claim 7, it is preferred that flat-panel and/or electronic paper displays, comprising relatively many integrated physical pixels, be used to accommodate such substantial visual patterns. For the avoidance of doubt, a "substantial visual pattern" in the context of claim 7 is herein defined as a visual pattern comprising 100 image pixels or more.

The previous embodiments illustrate the advantageous use of cellular automata algorithms for generating visual content, in the context of achieving spatial locality of reference. However, cellular automata are only one example class of algorithms that can be used for achieving such spatial locality of reference. Many algorithms that do not require substantial cell state information associated to far away cells for determining the next state of a given cell can achieve the same. A notable limitation of cellular automaton algorithms that is not required in the present invention is that cellular automaton algorithms update the states of all cells in the array of cells in each iteration of the algorithm; contrary to that, for the purposes of the present invention, only a sub-set of the cells, or perhaps even only a single cell, may have their states updated in any given iteration. For instance, the image generation algorithm may comprise e.g. a sub-algorithm for choosing which cell(s) is(are) to be updated in each iteration, as exemplified e.g. by the "Langton's Ant" algorithm or other Turing machine algorithms know in the art; said sub-algorithm may also be part of the global state transition rule. Another limitation of the strict definition of cellular automata in the art is that the state transition rule does not change as the automaton evolves; contrary to that, it is one of the very purposes of the present invention that the global controller updates and re-broadcasts the global state transition rule as the system (100) operates.

In order for the global controller to more effectively choose and/or generate the next global state transition rule, as well as choose the most (aesthetically) advantageous moment when to switch to the next global state transition rule, it is advantageous that the global controller can monitor past and/or current behavior of the system (i.e. the evolution of states and/or images generated). However, it is undesirable that data (e.g. cell states or image data) be required to be transmitted from the active display modules to the global controller for said system behavior monitoring to take place. Instead, it is preferred that the global controller have its own set of control states (analogous to the local sets of states comprised in the active display modules) to which it can apply the same global state transition rules broadcasted to the active display modules, in order to monitor the system behavior indirectly. This way, the global controller has its own separate, smaller-scale analogue of the system, whose behavior correlates well with the behavior of the system, without data communication from the active display modules to the global controller.

In a preferred embodiment, the global controller determines the global state transition rule according to a machine learning algorithm (as known in the art) that uses past and/or current behavior of the system to learn how best to determine future global state transition rules. There are at least two advantages to this preferred embodiment: (a) by determining future global state transition rules based on past and/or current behavior of the system, the embodiment ensures that no inconsistent change of style or image dynamics happens, but that both style and dynamics evolve smoothly, consistently, and pleasantly throughout operation of the system; and (b) by determining global state transition rules on-the-fly, according to a machine learning algorithm, as opposed to e.g. picking a rule from a pre-determined and limited set of possible choices, this embodiment ensures a practically unlimited variety of image styles and dynamics throughout operation. Examples of machine learning algorithms that can be advantageously utilized in this embodiment comprise unsupervised learning algorithms like e.g. data clustering algorithms, self-organizing map algorithms, or other artificial neural network and computational intelligence algorithms in general, as well as supervised learning and reinforcement learning algorithms where a human observer of the images generated by the system e.g. evaluates and grades said images, thereby giving feedback to the machine learning algorithm about what types of image style and dynamics are preferred. In the latter case, an interface (e.g. a computer terminal or a remote control) is needed for the human observer to input his/her grades into the system. A concrete and detailed example of a machine learning algorithm that can be advantageously used in this embodiment has been extensively described in "Method and Apparatus for Generating Visual Patterns", by Bernardo Kastrup, European patent application EP08166757.8, application date 16 October 2008. When the global controller comprises a general-purpose computer like a desktop, laptop, netbook, etc., the machine learning algorithms mentioned above can be easily and advantageously programmed and executed in said general-purpose computer.

Preferably, the machine learning algorithm uses the set of control states in the global controller as input for learning. Again preferably, said set of control states is organized in the form of a 2-dimensional array of cells, just as is the case with an active display module. The global controller then operates on said 2-dimensional array of cells by applying the global state transition rule to its control states. As mentioned earlier in this description, the evolution of the control states thereby achieved is representative of, and correlates well with, the evolution of the entire system's behavior. Therefore, the machine learning algorithm can learn about the entire system's behavior based solely on the evolution of said control states available locally in the global controller. Preferably, said control states are initialized randomly. By using past and/or current values of its own control states as a measure of past and/or current system behavior, the global controller can execute the machine learning algorithm without need for any data to be transmitted from the active display modules to the global controller. This way, bandwidth, speed, and power consumption problems, amongst others, are avoided.

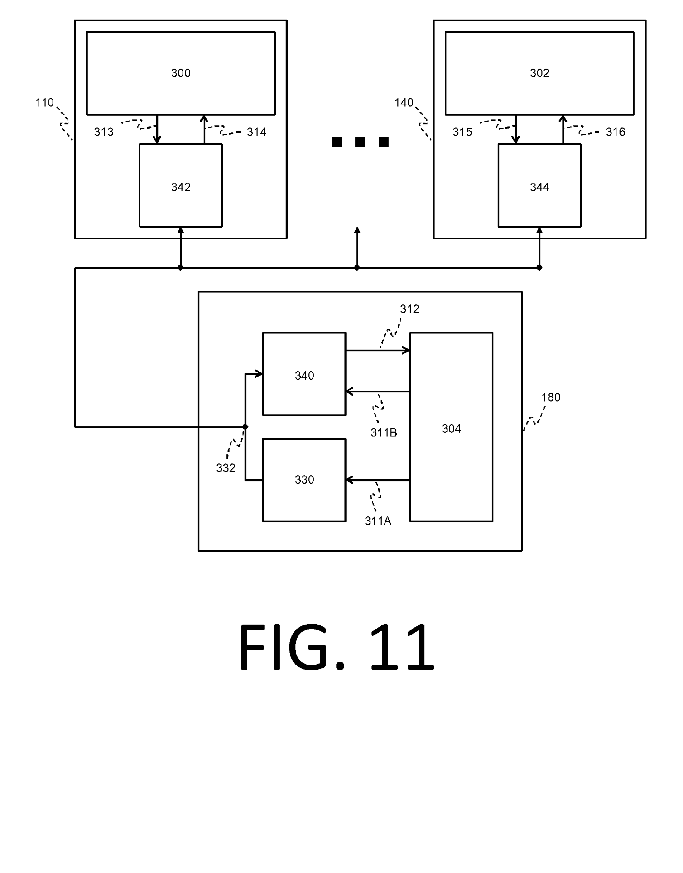

FIG. 11 schematically illustrates an embodiment of the method generally described in the three previous paragraphs. The global controller 180 comprises its own set of control states 304, preferably organized as a 2-dimensional array of cells. Control states 311A are read out from the set of control states 304 and inputted into the machine learning facility 330, which executes the machine learning algorithm. On the basis of control states 311A, the machine learning facility 330 generates a global state transition rule 332, which is then broadcasted to each state update facility 342, 344 of each active display module 110, 140 in the system, as well as to the state update facility 340 of the global controller 180. The state update facility 340 then reads out control states 311B (which may not necessarily be the exact same control states 311A read out by the machine learning facility 330) and applies the global state transition rule 332 to them in order to generate updated control states 312, which are then used to update the set of control states 304. Analogously, the state update facilities 342, 344 of each active display module 110, 140 read out their respective local states 313, 315 and apply the global state transition rule 332 to them in order to generate updated local states 314, 316, which are then used to update the respective local sets of states 300, 302. Preferably, the local sets of states 300, 302 are also organized as 2-dimensional arrays of cells. Many iterations can be performed by repeating the steps described above. Only two active display modules 110, 140 are explicitly shown in FIG. 11 for brevity and clarity reasons. The method described herein, however, applies analogously to any number of active display modules. It should be noted that, although the global controller 180 has no access to the local sets of states 300, 302, the fact that it operates on its own set of control states 304 in the same way that the active display modules operate on their local sets of states 300, 302 gives the global controller a very representative view of the entire system's behavior over time.

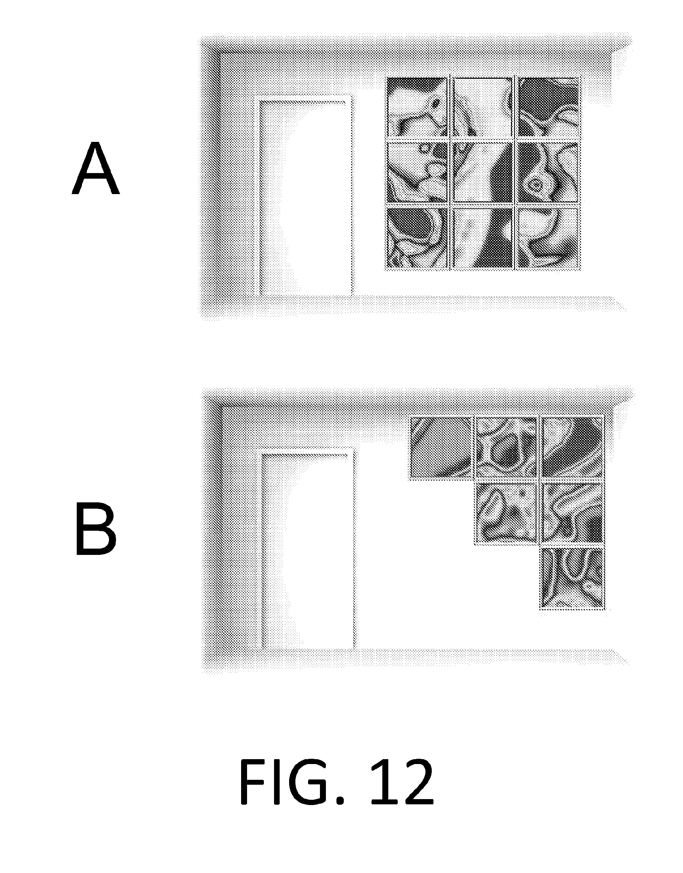

FIG. 12 A and B illustrate two different examples of images generated according to the embodiment illustrated in FIG. 11. The images shown were generated through a simulation of two systems, one (FIG. 12 A) comprising nine active display modules, and the other (FIG. 12 B) comprising six display modules. The global controller (180), the local communication facilities (150, 152, 154, 156), and the global communication facility (170) are not shown in FIG. 10; it is assumed that they are hidden (e.g. in or behind the wall) for aesthetic reasons.

It should be noted that the above-mentioned embodiments illustrate rather than limit the invention, and that those skilled in the art will be able to design many alternative embodiments without departing from the scope of the appended claims. It should also be noted that, although the description above is motivated by an application of the present invention in the context of architecture and interior design, those skilled in the art will be able to design advantageous embodiments for using the present invention in other fields or for other applications (e.g. games and toys) without departing from the scope of the appended claims. Algorithms, such as the image generation algorithm and the state update algorithm applied by the present invention may be executed by a facility such as a general-purpose processor, dedicated hardware or by configurable hardware. Various facilities may be combined, e.g. an image update facility and a state update facility may be formed by a general purpose-processor or other processor that executes the respective algorithms in a time-shared manner. In the claims, any reference signs placed between parentheses shall not be construed as limiting the claim. The words "comprising" or "comprises" do not exclude the presence of elements or steps other than those listed in the claim. The word "a" or "an" preceding an element or step does not exclude the presence of a plurality of such elements or steps. When a first element or step is said to "depend on" a second element or step, said dependency does not exclude that the first element or step may also depend on one or more other elements or steps. The mere fact that certain measures are recited in mutually different dependent claims does not indicate that a combination of these measures cannot be used to advantage.

## Claims

1. A system (100) comprising:
a plurality of active display modules (110, 120, 130, 140);
a global controller (180); and
a global communication facility (170) for connecting the global controller with each of the active display modules;
wherein each of the active display modules comprises:
a respective local set of states (300, 302);
a processing facility (114) for generating an image frame depending on the respective local set of states;
a display facility (112) for displaying the image frame;
a local communication interface (118) for communicating a state of the respective local set of states with another, adjacent one of the active display modules; and
a state update facility (342, 344) for updating a respective first state of the respective local set of states depending on a further, second state, wherein said second state is either comprised in said respective local set of states or communicated from another, adjacent one of the active display modules;
**characterized in that**:
the global controller comprises a facility for determining a global state transition rule (332);
the global communication facility serves to broadcast the global state transition rule from the global controller to each of the active display modules; and
the state update facility of each active display module updates the respective first state by applying the broadcasted global state transition rule to said respective first state.

2. A system as claimed in claim 1, **characterized in that** each of the active display modules generates and displays a plurality of successive image frames.

3. A system as claimed in claim 2, **characterized in that** the global controller determines and broadcasts a first global state transition rule at a first moment of the operation of the system, and a further, second global state transition rule at a subsequent, second moment of the operation of the system.

4. A system as claimed in claim 3, **characterized in that** each of the active display modules generates:
a respective first local set of updated states by applying the first global state transition rule to the respective local set of states; and
a respective second local set of updated states by applying the second global state transition rule to the respective first local set of updated states;

5. A system as claimed in claim 4, **characterized in that** each of the active display modules generates:
a first image frame of the plurality of successive image frames depending on the respective first local set of updated states; and
a second image frame of the plurality of successive image frames depending on the respective second local set of updated states.

6. A system as claimed in any of the preceding claims, **characterized in that** the local set of states of at least one of the active display modules is randomly initialized.

7. A system as claimed in any of the preceding claims, **characterized in that**:
a first one of the active display modules generates an image frame comprising a first substantial visual pattern;
a second one of the active display modules generates an image frame comprising a second substantial visual pattern;
the first one of the active display modules is adjacent to the second one of the active display modules; and
the first substantial visual pattern is visually coherent with the second substantial visual pattern.

8. A system as claimed in any of the preceding claims, **characterized in that**:
the global controller (180) comprises a set of control states (304); and
the global controller further comprises a state update facility (340) for applying the global state transition rule (332) to one or more control states (311B) of the set of control states, thereby updating the set of control states;

9. A system as claimed in claim 8, **characterized in that**:
the global controller (180) comprises a machine learning facility (330) for determining the global state transition rule (332) according to a machine learning algorithm; and
one or more control states (311A) of the set of control states (304) are used as input to the machine learning facility.

10. A system as claimed in any of the preceding claims, **characterized in that** the global controller comprises a general-purpose computer.

11. A system as claimed in any of the preceding claims, **characterized in that** at least one of the active display modules comprises a discrete light-emitting device.

12. A system as claimed in any of the preceding claims, **characterized in that** at least one of the active display modules comprises a flat-panel display.

13. A system as claimed in any of the preceding claims, **characterized in that** at least one of the active display modules comprises an electronic paper display.

14. A system as claimed in any of the preceding claims, **characterized in that** the global controller is comprised in one of the active display modules.

15. A method for generating and displaying images, the method comprising the steps of:
providing a plurality of active display modules (110, 120, 130, 140), each of said active display modules comprising a respective local set of states (300, 302);
providing a global controller (180);
providing a global communication facility (170) for connecting the global controller with each of the active display modules;
generating a respective image frame in each of the active display modules depending on the respective local set of states;
displaying the respective image frame in each of the active display modules;
in each of the active display modules, communicating a state of the respective local set of states with another, adjacent one of the active display modules; and
in each of the active display modules, updating a respective first state of the respective local set of states depending on a further, second state, wherein said second state is either comprised in said respective local set of states or communicated from another, adjacent one of the active display modules;
**characterized in that** the method further comprises the steps of:
determining a global state transition rule in the global controller;
broadcasting the global state transition rule from the global controller to each of the active display modules through the global communication facility; and
in each of the active display modules, updating the respective first state by applying the broadcasted global state transition rule to said respective first state.

## Amended claims

### Amended claims in accordance with Rule 137(2) EPC.

**1.** A system (100) comprising:
a plurality of active display modules (110, 120, 130, 140);
a global controller (180);
a global communication facility (170) for connecting the global controller with each of the active display modules; and
a plurality of local communication facilities (150, 152, 154, 156, 160, 162)
wherein each of the active display modules comprises:
a respective local set of states held by cells (300, 302),;
a processing facility (114) for generating an image frame depending on the respective local set of states;
a display facility (112) for displaying the image frame;
a local communication interface (118), connected to at least one of the plurality of local communication facilities,
a global communication interface (116), to interface the processing facility to the global communication facility, and
a state update facility (342, 344) for updating a respective first state of the respective local set of states depending on a further, second state of the respective local set of states;
**characterized in that**:
the active display modules are arranged to determine the respective local set of states held by the cells (300, 302), according to an image generation algorithm;
the local communication interface is arranged for communicating a state of the respective local set of states with another, adjacent one of the active display modules through said at least one of the local communication facilities;
the global controller is arranged to determine a global state transition rule (332), said global state transition rule being part of the image generation algorithm;
the global communication facility is arranged to broadcast the global state transition rule from the global controller to each of the active display modules; and
the state update facility of each active display module is arranged to update the respective first state by applying the broadcasted global state transition rule to said respective first state.

**2.** A system as claimed in claim 1, **characterized in that** the state update facility of each active display module is further arranged to update the respective first state of its respective local set of states further depending on a respective third state, wherein said respective third state is communicated from another, respectively adjacent one of the active display modules through the respective local communication interface.

**3.** A system as claimed in any of the preceding claims, **characterized in that** each of the active display modules is arranged to generate and display a respective plurality of successive image frames.

**4.** A system as claimed in claim 3, **characterized in that** the global controller is arranged to determine and broadcast a first global state transition rule at a first moment of the operation of the system, and a further, second global state transition rule at a subsequent, second moment of the operation of the system.

**5.** A system as claimed in claim 4, **characterized in that** each of the active display modules is arranged to generate:
a respective first local set of updated states by applying the first global state transition rule to the respective local set of states; and
a respective second local set of updated states by applying the second global state transition rule to the respective first local set of updated states;

**6.** A system as claimed in claim 5, **characterized in that** each of the active display modules is arranged to generate:
a respective first image frame of the respective plurality of successive image frames depending on the respective first local set of updated states; and
a respective second image frame of the respective plurality of successive image frames depending on the respective second local set of updated states.

**7.** A system as claimed in any of the preceding claims, **characterized in that** the system is arranged to randomly initialize the local set of states of at least one of the active display modules.

**8.** A system as claimed in any of the preceding claims, **characterized in that**:
a first one of the active display modules is arranged to generate a first image frame comprising a first visual pattern, said first visual pattern comprising at least 100 image pixels;
a second one of the active display modules is arranged to generate a second image frame comprising a second visual pattern, said second visual pattern also comprising at least 100 image pixels;
the system is arranged so that the first one of the active display modules is adjacent to the second one of the active display modules; and
the system is further arranged so that the first visual pattern is visually coherent with the second visual pattern.

**9.** A system as claimed in any of the preceding claims, **characterized in that**:
the global controller (180) comprises a set of control states (304); and
the global controller further comprises a state update facility (340) for applying the global state transition rule (332) to one or more control states (311B) of the set of control states, thereby updating the set of control states;

**10.** A system as claimed in claim 9, **characterized in that**:
the global controller (180) comprises a machine learning facility (330) for determining the global state transition rule (332) according to a machine learning algorithm; and
one or more control states (311A) of the set of control states (304) are used as input to the machine learning facility.

**11.** A system as claimed in any of the preceding claims, **characterized in that** the global controller comprises a general-purpose computer.

**12.** A system as claimed in any of the preceding claims, **characterized in that** at least one of the active display modules comprises a discrete light-emitting device.

**13.** A system as claimed in any of the preceding claims, **characterized in that** at least one of the active display modules comprises an electronic paper display.

**14.** A method for generating and displaying images, the method comprising the steps of:
providing a plurality of active display modules (110, 120, 130, 140), each of said active display modules comprising a respective local set of states held by cells (300, 302),
providing a global controller (180);
providing a global communication facility (170) for connecting the global controller with each of the active display modules;
generating a respective image frame in each of the active display modules depending on the respective local set of states;
displaying the respective image frame in each of the active display modules;
in each of the active display modules, communicating a state of the respective local set of states with another, adjacent one of the active display modules; and
in each of the active display modules, updating a respective first state of the respective local set of states depending on a further, second state of the respective local set of states,
**characterized in that**
said second state is communicated from another, adjacent one of the active display modules through one of a plurality of local communication facilities; and **in that** the method further comprises the steps of:
determining a global state transition rule in the global controller, said global state transition rule being part of an image generation algorithm that determines said states;
broadcasting the global state transition rule from the global controller to each of the active display modules through the global communication facility; and
in each of the active display modules, updating the respective first state by applying the broadcasted global state transition rule to said respective first state.

**15.** A method as claimed in claim 14, **characterized in that** sais first state is updated further depending on a third state, said third state being communicated from another, adjacent one of the active display modules via one of a plurality of local communication facilities.
